# NEW EUROPEAN PATENT SPECIFICATION

(11) **EP 2 152 454 B2**
(45) Date of publication and mention of the opposition decision: **22.02.2017**
(45) Mention of the grant of the patent: 03.07.2013
(21) Application number: 08802892.3
(22) Date of filing: 04.06.2008
(51) Int. Cl.: D04H 3/04, B32B 5/26, D04H 3/12

(54) **FIBROUS REINFORCEMENT, SUCH AS A REINFORCEMENT FOR COMPOSITE MATERIAL**
FASERVERSTÄRKUNG, Z. B. ALS VERSTÄRKUNG FÜR EIN VERBUNDMATERIAL
RENFORCEMENT FIBREUX, TEL QU'UN RENFORCEMENT POUR MATÉRIAU COMPOSITE

(30) Priority: 08.06.2007 IT PD20070200
(43) Date of publication of application: 17.02.2010
(73) Proprietor: G. Angeloni S.r.l., 30020 Quarto D'Altino (IT)
(72) Inventor: ANGELONI, Mario, I-30174 Mestre (IT)
(74) Representative: Iannone, Carlo Luigi
(86) International application number: PCT/EP2008/056903
(87) International publication number: WO 2008/148791

(56) References cited:
- EP-A- 0 768 167
- WO-A-2007/041782
- WO-A1-92/17331
- WO-A1-02/081790
- WO-A1-2006/075962
- GB-A- 1 112 578
- GB-A- 1 476 929
- JP-A- 2001 030 393
- US-A- 3 873 389
- US-A- 3 961 396
- US-A- 5 326 630
- US-A- 5 783 278
- US-A- 5 902 431
- US-A1- 2002 124 900
- US-B1- 6 183 835
- US-B1- 6 238 761
- US-B1- 6 311 377
- US-B1- 6 410 126
- US-B1- 6 503 856
- US-B1- 6 808 796

## Description

### Technical Field

The present invention relates to a fibrous reinforcement, such as a reinforcement for composite material, and to the method for obtaining it.

### Background Art

Reinforcements for composite material, particularly made of carbon fiber, obtained from bundles of fibers, known as yarns, which are arranged mutually adjacent and subsequently spread in order to scatter and uniformly arrange their fibers transversely, are currently known.

These yarns are classified according to their count, which indicates the number of fibers that compose each individual yarn.

Accordingly, yarns are currently commercially available which have a count of for example 3k, 6k, et cetera, which indicates that these yarns are composed of bundles of respectively 3000, 6000 fibers, et cetera, such fibers been kept in mutual adhesion, so as to form the yam, by a suitable lacquer.

Once the yarns have been spread so as to obtain a skin of fibers, in order to fix the fibers in this configuration it is known to resort to filaments which are arranged transversely to them, forming a weft.

Another solution consists in depositing, on one or both of the faces of the skin, a film of adhesive or an adhesive filament which lies transversely to the fibers. A reinforcement of this type having an adhesive filament is disclosed in EP0768167.

Such types of reinforcement have drawbacks.

The use of a weft filament or of an adhesive filament as a method for fixing the fibers in fact causes unevenness in the thickness of the reinforcement.

The application of a film of adhesive, however, while not generating unevenness in thickness, makes the reinforcement less permeable to the resins with which it must be impregnated.

In addition to reinforcements which have a skin of fibers retained by a weft or an adhesive, known as dry reinforcements, pre-impregnated reinforcements are currently known.

These reinforcements are prepared by impregnating the skin of fibers with a partially catalyzed resin which is adapted to be activated, completing catalysis, upon use.

This resin also retains the fibers, preventing their mutual spacing or unraveling.

It is thus possible to obtain pre-impreguated reinforcements which have skins of fibers which are distributed uniformly with a much lower count than is currently possible in skins for dry reinforcements, where the term "count" describes, in a manner similar to yarns, the fiber density and therefore the specific weight per unit surface of the skin.

In dry reinforcements, the fibers are in fact retained in position only by the adhesive or by the weft filament, and therefore a very low count causes the generation of unwanted unevenness transversely to the fibers during the handling of the reinforcement.

Accordingly, dry reinforcements are currently not known which have weights per unit surface of less than 100 g/m², while pre-impregnated reinforcements which reach minimum weights per unit surface of approximately 30 g/m² are known.

However, pre-impregnated reinforcements have the known drawback of not being usable to provide an interweaving reinforcement, i.e. with bundles of unidirectional fibers which are interwoven transversely so as to form a fabric with a weft and a warp which are substantially perpendicular to each other.

Further, in order to obtain dry reinforcements of high value, i.e., with highly uniform fiber distribution, transversely thereto, it is known to the person skilled in the art that it is necessary to use bundles of fibers with a low number as raw material.

Yarns with a count of 1k, 2k, 3k, 6k, 12k, 15k and higher are currently available; among these, however, the availability of 1k, 2k, 3k yarns is limited, their processing being further more complex and their market price being significantly higher than solutions having a higher count, to the full disadvantage of economy in the production of the reinforcements that can be obtained from them.

### Disclosure of the Invention

The aim of the present invention is to provide a dry fibrous reinforcement which can be manufactured starting from yarns with a lower count than currently known dry reinforcements, despite having at least the same uniformity of distribution of fibers in the skin.

Within this aim, an object of the invention is to provide a method which is adapted to provide said fibrous reinforcement even starting from yarns with a count of 12k or more.

Another object of the invention is to provide a fibrous reinforcement which is structurally simple and easy to use and can be manufactured with low costs.

This aim and these and other objects, which will become better apparent hereinafter, are achieved by a dry fibrous reinforcement as defined in the appended claims.

### Brief description of the drawings

Further characteristics and advantages of the invention will become better apparent from the following detailed description of a preferred but not exclusive embodiment of the fibrous reinforcement according to the invention, illustrated by way of non-limiting example in the accompanying drawings, wherein:
Figure 1 is an enlarged-scale transverse sectional view of a detail of the fibrous reinforcement according to the invention;
Figure 2 is an enlarged-scale top plan view of a detail of the fibrous reinforcement according to the invention;
Figure 3 is a perspective view of the fibrous reinforcement according to the invention;
Figure 4 is a diagram of the process for manufacturing the fibrous reinforcement according to the invention.

### Ways of carrying out the Invention

It is noted that anything found to be already known during the patenting process is understood not to be claimed and to be the subject of a disclaimer.

With reference to the figures, the reference numeral 10 generally designates a fibrous reinforcement, such as reinforcement for composite material, which according to the invention has the particularity of comprising at least two skins 11 of fibers 12, which are interconnected by an adhesive interlay 13, each of the skins 11 having the fibers 12 arranged substantially unidirectionally.

Preferably, the fibrous reinforcement 10 comprises only two skins 11 with fibers arranged substantially unidirectionally and in a parallel configuration.

Further, the adhesive interlay 13 forms a lattice 14 which is finely distributed substantially uniformly between the skins 11, so as to couple them to each other monolithically while not compromising the resin permeability of the reinforcement 10.

The fibrous reinforcement 10 further conveniently provides at least one skin 11 made of carbon fibers and/or glass fibers and/or Aramid fibers.

Conveniently, the adhesive interlay 13 comprises hot-melt thermoplastic adhesive material.

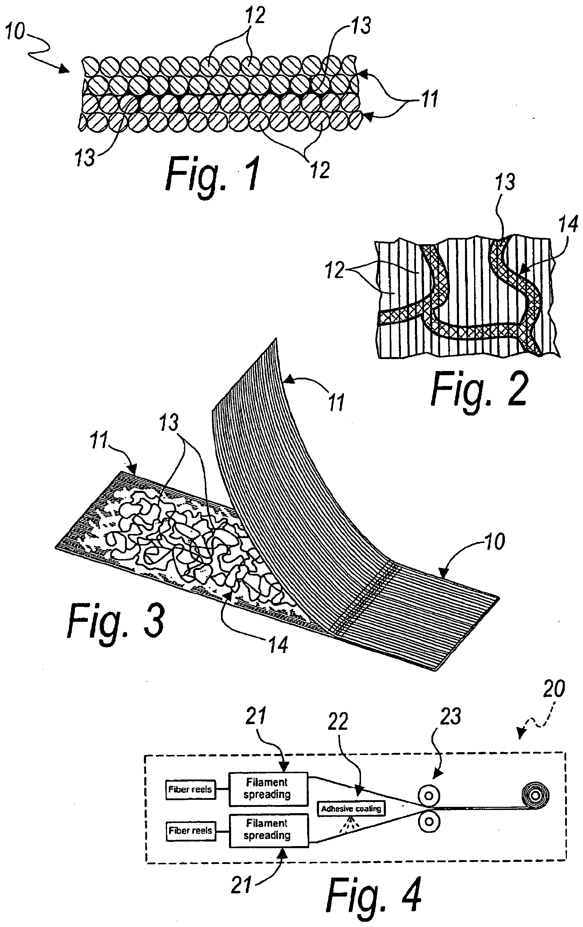

According to the invention, the fibrous reinforcement 10 is manufactured according to a process, the diagram of which is shown in Figure 4, generally designated by the reference numeral 20 and having the particularity of comprising:
- a first step 21 for spreading the fibers 12 unwound from storage reels so as to form in parallel the skins 11 of the fibers 12;
- a second step 22 for the adhesive coating of at least one face 15 of at least one skin 11 of the at least two skins 11;
- a third step 23 for coupling, preferably by calendering, the skins 11 to obtain the fibrous reinforcement 10.

Conveniently, the first spreading step 21 comprises the uniform transverse arrangement of the fibers 12, while the second adhesive coating step 22 advantageously comprises the deposition of a filament of adhesive interlay 13 on at least one face 15 of at least one of the skins 11.

In practice it has been found that the invention achieves the proposed aim and objects, by providing a fibrous reinforcement which, by way of its configuration with the skins retained by a distributed interlay of adhesive, allows such a spreading of the fibers that form the skins as to obtain a skin with a much lower count than fiber skins currently used in known reinforcements.

Thus, a dry fibrous reinforcement according to the invention can be provided with much lower counts than currently known dry reinforcements, reaching even 70 g/m².

Further, a fibrous reinforcement according to the invention, by having the particular distribution of the adhesive interlay, ensures high permeability to fixing resins.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2007A000200 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A dry fibrous reinforcement, such as a reinforcement for composite material, **characterized in that** it comprises two skins (11) of fibers (12) which are interconnected by an adhesive interlay (13), each of said two skins (11) having all of said fibers (12) thereof arranged substantially unidirectionally, and the fibers (12) of said two skins (11) being arranged in a parallel configuration; the adhesive interlay (13) consisting of an adhesive filament.

2. The dry fibrous reinforcement according to claim 1, **characterized in that** said adhesive interlay (13) forms, between said skins (11), a lattice (14) which is finely distributed in a substantially uniform manner for the resin permeability of said dry fibrous reinforcement.

3. The dry fibrous reinforcement according to claim 1, **characterized in that** said two skins (11) of fibers (12) comprise at least one skin (11) of carbon fibers (12).

4. The dry fibrous reinforcement according to one or more of the preceding claims, **characterized in that** said two skins (11) of fibers (12) comprise at least one skin (11) of glass fibers (12).

5. The dry fibrous reinforcement according to one or more of the preceding claims, **characterized in that** said two skins (11) of fibers (12) comprise at least one skin (11) of Aramid fibers (12).

6. The dry fibrous reinforcement according to one or more of the preceding claims, **characterized in that** said adhesive interlay (13) comprises hot melt thermoplastic adhesive material.

7. A method (20) for obtaining a dry fibrous reinforcement (10), such as a reinforcement for composite material, **characterized in that** it comprises:
- a first step (21) for spreading the fibers (12) unwound from storage reels so as to form in parallel two skins (11) of fibers (12) such that each of said two skins (11) having all the said fibers (12) thereof arranged substantially unidirectionally;
- a second step (22) for the adhesive coating of at least one face (15) of at least one skin (11) of said two skins (11);
- a third step (23) for coupling said two skins (11) to obtain said dry fibrous reinforcement (10) such that the fibers (12) of both of said two skins (11) being arranged in a parallel configuration.

8. The method according to claim 7, **characterized in that** said first spreading step comprises the transverse uniform arrangement of said fibers (12).

9. The method according to claims 7 and 8, **characterized in that** said second step of adhesive coating comprises the deposition of a filament of adhesive interlay (13) on said at least one face (15) forming a lattice (14) which is finely distributed in a substantially uniform manner for the resin permeability of said dry fibrous reinforcement (10).

10. The method according to claims 7, 8 and 9, **characterized in that** said third step comprises a calendaring of said at least two skins (11) for their coupling.

## Patentansprüche

1. Trockene Faserverstärkung, wie eine Verstärkung für Kompositmaterial, **dadurch gekennzeichnet, dass** sie zwei Randschichten (11) aus Fasern (12) umfasst, die durch eine adhäsive Zwischenschicht (13) miteinander verbunden sind, wobei jede der zwei Randschichten (11) alle von deren Fasern (12) im Wesentlichen unidirektional angeordnet aufweist, und die Fasern (12) der zwei Randschichten (11) in einer parallelen Konfiguration angeordnet sind; wobei die adhäsive Zwischenschicht (13) aus einem adhäsiven Faden besteht.

2. Trockene Faserverstärkung gemäß Anspruch 1, **dadurch gekennzeichnet, dass** die adhäsive Zwischenschicht (13) zwischen den Randschichten (11) ein Netzwerk (14) bildet, das in einer im Wesentlichen gleichförmigen Weise für die Harzpermeabilität der trockenen Faserverstärkung fein verteilt ist.

3. Trockene Faserverstärkung gemäß Anspruch 1, **dadurch gekennzeichnet, dass** die zwei Randschichten (11) aus Fasern (12) mindestens eine Randschicht (11) aus Karbonfasern (12) umfassen.

4. Trockene Faserverstärkung gemäß einem oder mehreren der vorhergehenden Ansprüche, **dadurch gekennzeichnet, dass** die zwei Randschichten (11) aus Fasern (12) mindestens eine Randschicht (11) aus Glasfasern (12) umfassen.

5. Trockene Faserverstärkung gemäß einem oder mehreren der vorhergehenden Ansprüche, **dadurch gekennzeichnet, dass** die zwei Randschichten (11) aus Fasern (12) mindestens eine Randschicht (11) aus Aramid-Fasern (12) umfassen.

6. Trockene Faserverstärkung gemäß einem oder mehreren der vorhergehenden Ansprüche, **dadurch gekennzeichnet, dass** die adhäsive Zwischenschicht (13) ein heißschmelzendes thermoplastisches Klebematerial umfasst.

7. Verfahren (20) zum Erhalten einer trockenen Faserverstärkung (10), wie einer Verstärkung für Kompositmaterial, **dadurch gekennzeichnet, dass** es umfasst:
- einen ersten Schritt (21) zum Ausbreiten von Fasern (12), die von Speicherspulen abgewickelt wurden, um parallel zwei Randschichten (11) aus Fasern (12) derart zu bilden, dass jede der zwei Randschichten (11) alle von deren Fasern (12) im Wesentlichen unidirektional angeordnet aufweist;
- einen zweiten Schritt (22) zum adhäsiven Beschichten von mindestens einem Äußeren (15) von mindestens einer Randschicht (11) der zwei Randschichten (11);
- einen dritten Schritt (23) zum Verbinden der zwei Randschichten (11), um die trockene Faserverstärkung (10) derart zu erhalten, dass die Fasern (12) von beiden der zwei Randschichten (11) in einer parallelen Konfiguration angeordnet sind.

8. Verfahren gemäß Anspruch 7, **dadurch gekennzeichnet, dass** der erste Schritt des Ausbreitens die transversale gleichförmige Anordnung der Fasern (12) umfasst.

9. Verfahren gemäß den Ansprüchen 7 und 8, **dadurch gekennzeichnet, dass** der zweite Schritte des adhäsiven Beschichtens die Deposition eines Filaments einer adhäsiven Zwischenschicht (13) auf dem mindestens einen Äußeren (15) umfasst, wobei ein Netzwerk (14) gebildet wird, das in einer im Wesentlichen gleichförmigen Weise für die Harzpermeabilität der trockenen Faserverstärkung (10) fein verteilt ist.

10. Verfahren gemäß den Ansprüchen 7, 8 und 9, **dadurch gekennzeichnet, dass** der dritte Schritt ein Kalandrieren der zwei Randschichten (11) für deren Verbinden umfasst.

## Revendications

1. Renfort fibreux sec, tel qu'un renfort pour matériau composite, **caractérisé en ce qu'**il comprend deux peaux (11) de fibres (12) qui sont interconnectées par une couche intercalaire adhésive (13), chacune desdites deux peaux (11) ayant toutes ses fibres (12) agencées de manière essentiellement unidirectionnelle, et les fibres (12) desdites deux peaux (11) étant agencées selon une configuration parallèle, la couche intercalaire adhésive (13) se composant d'un filament adhésif.

2. Renfort fibreux sec selon la revendication 1, **caractérisé en ce que** ladite couche intercalaire adhésive (13) forme, entre lesdites peaux (11), un maillage (14) finement distribué, d'une manière essentiellement uniforme, pour la perméabilité à la résine dudit renfort fibreux sec.

3. Renfort fibreux sec selon la revendication 1, **caractérisé en ce que** lesdites deux peaux (11) de fibres (12) comprennent au moins une peau (11) de fibres de carbone (12).

4. Renfort fibreux sec selon une ou plusieurs des revendications précédentes, **caractérisé en ce que** lesdites deux peaux (11) de fibres (12) comprennent au moins une peau (11) de fibres de verre (12).

5. Renfort fibreux sec selon une ou plusieurs des revendications précédentes, **caractérisé en ce que** lesdites deux peaux (11) de fibres (12) comprennent au moins une peau (11) de fibres d'aramide (12).

6. Renfort fibreux sec selon une ou plusieurs des revendications précédentes, **caractérisé en ce que** ladite couche intercalaire adhésive (13) comprend un matériau adhésif thermoplastique thermofusible.

7. Procédé (20) d'obtention d'un renfort fibreux sec (10), tel qu'un renfort pour matériau composite, **caractérisé en ce qu'**il comprend :
- une première étape (21) d'étalement de fibres (12) déroulées de bobines de stockage, de façon à former en parallèle deux couches (11) de fibres (12) de telle sorte que chacune des deux peaux (11) ait toutes ses fibres (12) agencées de manière essentiellement unidirectionnelle ;
- une deuxième étape (22) d'application d'un adhésif sur au moins une face (15) d'au moins une peau (11) desdites deux peaux (11) ;
- une troisième étape (23) de couplage desdites deux peaux (11) pour obtenir ledit renfort fibreux sec (10) de telle sorte que les fibres (12) desdites deux peaux (11) soit agencées selon une configuration parallèle.

8. Procédé selon la revendication 7, **caractérisé en ce que** ladite première étape d'étalement comprend l'agencement uniforme transversal desdites fibres (12).

9. Procédé selon les revendications 7 et 8, **caractérisé en ce que** ladite deuxième étape d'application d'adhésif comprend le dépôt d'un filament de couche intercalaire adhésive (13) sur ladite au moins une face (15), formant un maillage (14) finement distribué, d'une manière essentiellement uniforme, pour la perméabilité à la résine dudit renfort fibreux sec (10).

10. Procédé selon les revendications 7, 8 et 9, **caractérisé en ce que** ladite troisième étape comprend un calandrage desdites deux peaux (11) pour leur couplage.
